# DEMANDE DE BREVET EUROPEEN

(11) **EP 2 450 730 A1**
(43) Date de publication de la demande: **09.05.2012**
(21) Numéro de dépôt: 11188087.8
(22) Date de dépôt: 07.11.2011
(51) Int. Cl.: G02B 6/44

(54) **Système de dérivation de modules optiques**

(30) Priorité: 05.11.2010 FR 1059148
(71) Demandeur: Acome Société Cooperative et Participative Société Anonyme Cooperative de Production à Capital Variable, 75014 Paris (FR)
(72) Inventeur: Martin, Olivier, 50140 Mortain (FR); Chevalier, Pacôme, 35510 Cesson Sevigne (FR)
(74) Mandataire: Callon de Lamarck, Jean-Robert

(57) **Abrégé**

L'invention concerne un système de dérivation comprenant un boîtier de dérivation adapté pour être rapporté sur un câble (1) de distribution, ledit câble (1) de distribution comprenant une fenêtre (3) pratiquée sur une longueur du câble (1) de distribution et une pluralité de modules optiques (4, 5, 6) accessibles par ladite fenêtre (3), et des conduites (41,51,61) annelées de protection chacune étant adaptée pour loger un module optique (4,5,6).

## Description

### DOMAINE TECHNIQUE GENERAL

L'invention concerne un système de dérivation de câbles de télécommunication, particulièrement utilisés pour le réseau d'abonnés (en anglais, *« Fiber To The* Home », (FTTH))et son procédé d'installation correspondant.

### ETAT DE LA TECHNIQUE

L'installation de la fibre optique chez des abonnés nécessite de raccorder l'abonné à un câble de distribution, raccordé à un fournisseur de service, installé, par exemple, dans un immeuble d'habitation.

Le câble de distribution comporte plusieurs modules optiques et pour raccorder chaque abonné il est nécessaire de dériver un module optique vers l'installation de l'abonné.

Pour effectuer une telle dérivation, un module optique est tiré du câble de distribution par une fenêtre préalablement pratiquée dans le câble de distribution.

Le module optique est ensuite logé dans une conduite de protection et est raccordé à l'installation de l'abonné.

Le raccordement peut se faire par l'intermédiaire d'un boitier situé dans un immeuble d'habitation à l'étage de l'abonné.

Un problème est que les syndicats d'immeubles refusent la présence de tel boitier en apparent dans les parties communes.

Une solution est d'utiliser un boitier de dérivation qui est rapporté sur le câble de distribution et qui est soit disposé en apparent soit dans un coffret encastré dans un mur (bloc, boitier de dérivation de type électrique, etc.). Un tel boitier permet de dériver plusieurs modules optiques vers plusieurs abonnés.

Cependant, les boitiers disponibles sur le marché ne sont pas optimisés dans une application de coffret encastré exigu et/ou encombré.

En effet, il est souvent impossible d'utiliser l'ensemble des sorties du boitier permettant le raccordement aux abonnés car les routages des modules optiques en sortie ne respecteraient pas les contraintes de rayon de courbure tolérées par les modules optiques.

### PRESENTATION DE L'INVENTION

Un objectif de l'invention est de pallier les inconvénients précités. Cet objectif est atteint par l'invention qui concerne un système de dérivation comprenant :
- un boitier de dérivation adapté pour être rapporté sur un câble de distribution, ledit câble de distribution comprenant une fenêtre pratiquée sur une longueur du câble de distribution et une pluralité de modules optiques accessibles par ladite fenêtre, le boitier de dérivation comprenant :
   ■ une base plate adaptée pour être fixée au-dessus du câble de distribution parallèlement à un axe longitudinal central dudit câble, la base comprenant consécutivement : une zone de dérivation, une zone d'arrimage et une zone de routage, la zone de dérivation comprenant une lumière adaptée pour être disposée au-dessus de la fenêtre du câble de distribution et dont les dimensions permettent de laisser passer au moins un module optique ;
le système de dérivation étant caractérisé en ce qu'il comprend en outre :
- des conduites annelées de protection chacune étant adaptée pour loger un module optique; en ce que
- la zone d'arrimage comprend des canaux chacun étant adapté pour l'arrimage d'une conduite annelée de protection logeant un module optique par insertion en force de ladite conduite annelée dans le canal, les canaux étant au-dessus du câble de distribution ; en ce que
- les zones d'arrimage et de routage sont disposées au-dessus de la fenêtre (3) et sont adaptées pour guider les conduites annelées de protection depuis la zone d'arrimage, selon une courbure imposée à la conduite vers une direction déterminée.

L'invention est avantageusement complétée par les caractéristiques suivantes, prises seules ou en une quelconque de leur combinaison techniquement possible :
- la zone d'arrimage recouvre partiellement la fenêtre du câble de distribution ;
- la base a une longueur au moins égale à la longueur de la fenêtre du câble de distribution ;
- il comprend des moyens de maintien du boitier sur le câble de distribution, disposés de part et d'autre de la base dans le prolongement de la zone de dérivation d'une part et dans le prolongement de la zone de routage d'autre part, pour maintenir le boitier en position sur le câble de distribution ;
- les moyens de maintien sont venus de matière depuis respectivement la zone de dérivation d'une part et depuis la zone de routage d'autre part ;
- il comprend des colliers de serrage entourant les moyens de maintien et le câble de distribution de manière à ce que le boitier soit immobile par rapport au câble de distribution ;
- les moyens de maintien comprennent des rugosités disposées sur la partie des moyens de maintien adaptée pour être en contact direct avec le câble de distribution ;
- les conduites annelées sont insérées en force dans un canal sur une longueur inférieure à la longueur totale de la conduite annelée ;
- la zone de routage est adaptée pour guider la conduite de protection depuis la zone d'arrimage, selon un rayon de courbure supérieur à 5 mm mesuré à partir de la jonction entre la zone d'arrimage et la zone de routage ;
- la zone de routage a une longueur supérieure au minimum de rayon de courbure admissible pour le module optique ;
- il comprend un couvercle adapté pour s'emboiter sur la zone de dérivation de la base pour recouvrir la lumière de la zone de dérivation.

Et l'invention concerne également un procédé de dérivation d'un module optique d'un câble de distribution dans lequel une fenêtre a été préalablement pratiquée, le procédé comprenant une disposition d'un système de dérivation selon l'une des revendications précédentes consistant à mettre en oeuvre les étapes suivantes :
- tirage d'un module optique depuis la fenêtre ;
- disposition du boitier de dérivation au-dessus de la fenêtre avec passage d'un module optique au travers de la lumière de la zone de dérivation ;
- installation du module optique ainsi dérivé au travers d'une conduite ;
- installation de la conduite annelée dans les moyens d'arrimage ;
- orientation du module optique ainsi installé dans la zone de routage vers la direction déterminée.

Les avantages de l'invention sont multiples.

Il est possible d'utiliser tous les emplacements prévus dans la zone d'arrimage et ce même en milieu exigu. On précise ici que l'on entend par exigu tout milieu encombré ou de faible diamètre de l'ordre de 80mm à 100mm.

La présence de conduite annelée de protection il est possible de router un ou plusieurs modules optiques en les courbant vers une direction déterminée sans effet de paille. Les courbures appliquées peuvent être telles qu'un module optique peut faire un angle supérieur à 90° par rapport à un axe central longitudinal du câble de distribution.

### PRESENTATION DES FIGURES

D'autres caractéristiques et avantages de l'invention ressortiront encore de la description qui suit laquelle est purement illustrative et non limitative et doit être lue en regard des dessins annexés sur lesquels :
- les figures 1 à 4 illustrent un mode de mise en oeuvre du sytème de dérivation conforme à un mode de réalisation de l'invention ;
- la figure 5 illustre une vue détaillée au niveau de la zone d'arrimage du système de dérivation conforme à un mode de réalisation de l'invention ;
- la figure 6 illustre une autre vue détaillée au niveau de la zone d'arrimage du système de dérivation conforme à un mode de réalisation de l'invention ;
- la figure 7 illustre une vue tridimensionnelle du système de dérivation conforme à un mode de réalisation de l'invention ;
- les figures 8a à 8c illustrent différents positionnements de modules optiques dérivés avec le système de dérivation conforme à un mode de réalisation de l'invention positionné dans un coffret.

Sur l'ensemble des figures, les éléments similaires portent des références numériques identiques.

### DESCRIPTION DETAILLEE DE L'INVENTION

Le système de dérivation selon un mode de réalisation de l'invention comprend un boîtier de dérivation destiné à être rapporté sur un câble 1 de distribution, en particulier pour le réseau d'abonnés FTTH.

Le câble 1 de distribution comporte un ou plusieurs modules optiques 4, 5, 6 rassemblant eux-mêmes une ou plusieurs fibres optiques (non représentées).

Typiquement, le boîtier présente une longueur comprise entre 55 et 90 mm, une largeur comprise entre 7 et 25 mm et une hauteur comprise entre 10 et 17 mm. On pourra par exemple prévoir des dimensions du boîtier telles que la longueur est égale à 76 mm, et que la largeur est égale à 21 mm et une hauteur égale à 17 mm.

Le câble de distribution 1 comporte une fenêtre 3 pratiquée au préalable sur une longueur de câble. Une telle fenêtre 3 est pratiquée au moyen d'un outil spécifique et sur une longueur de 50 à 60 mm et sur une largeur de 3,5 à 8 mm.

On précise ici que l'on entend par fenêtre, une zone du câble de distribution sur laquelle la gaine a été retirée, la zone ne faisant pas le tour du câble.

La fenêtre 3 permet de rendre accessible un ou plusieurs modules optiques 4, 5, 6.

Le boitier de dérivation comprend une base 2 adaptée pour fixer le boitier au dessus du câble 1 et de la fenêtre 3. La base 2 est, de préférence, plate et est disposée parallèlement à un axe central longitudinal (non représenté) du câble de distribution.

Pour assurer la fixation du boitier sur le câble, le boitier comporte des moyens de maintien 24, 25 disposés de part et d'autre de la base 2.

Ces moyens de maintien 24, 25 sont, de préférence, venus de matière de la base 2 et se présentent sous la forme d'embouts plats.

En outre, pour limiter les mouvements de glissement/translation du boitier par rapport au câble de distribution, les moyens de maintien 24, 25 comprennent des rugosités disposés sur la partie en contact direct avec le câble 1 de distribution.

La fixation du boitier sur le câble de distribution 1 est obtenue en plaçant des colliers de serrage 241, 251 entourant le câble et les moyens de maintien 24, 25 de préférence au-delà de la fenêtre 3 du câble 1.

On note que le boitier est disposé sur le câble 1 de manière à être centré sur la fenêtre 3 du câble 1 de distribution.

La base 2 comprend une zone de dérivation 21, une zone d'arrimage 22 et une zone de routage 23.

Chacune de ces zones a une fonction spécifique. Elles sont disposées consécutivement de sorte que la zone d'arrimage 22 est dans le prolongement de la zone de dérivation 21 et la zone de routage 23 est dans le prolongement de la zone d'arrimage 22.

Bien entendu les zones de dérivation, de routage et d'arrimage sont disposées au-dessus du câble 1 de dérivation.

La largeur et longueur de la fenêtre 3 d'ouverture permettent d'extraire un ou plusieurs modules optiques 4, 5, 6 du câble 1 de distribution.

Pour ce faire, la zone de dérivation 21 comprend une lumière 211 qui est disposée au dessus de la fenêtre.

Ainsi, la zone de dérivation 21 permet de router un ou plusieurs modules optiques 4, 5, 6 extraits du câble de distribution 1 par l'intermédiaire de la lumière 211.

Les dimensions de la lumière 211 sont telles que la lumière 211 permet de laisser passer un ou plusieurs modules optiques 4, 5, 6.

En outre, les dimensions de la lumière 211 sont différentes de celles de la fenêtre 3 : par exemple au moins deux fois plus petite.

La zone d'arrimage 22 permet d'arrimer les modules optiques 4, 5, 6 sur le boitier.

Pour ce faire, le système de dérivation comprend également des conduites 45, 51, 61 annelées de protection chacune étant adaptée pour loger un module optique 4, 5, 6 : ce sont ces conduites de protection 41, 51, 61 logeant chacune un module optique 4, 5, 6 qui sont arrimées sur le boitier.

Ces conduites de protection sont de préférences des micro-conduites annelées de diamètre typiquement égal de 3 mm à 5 mm suivant l'application.

La zone d'arrimage 22 comprend des moyens d'arrimage 222 qui sont adaptés pour que les conduites annelées de protection 41, 51, 61 s'enfoncent en force dans ces moyens d'arrimage. Il s'agit en particulier de canaux.

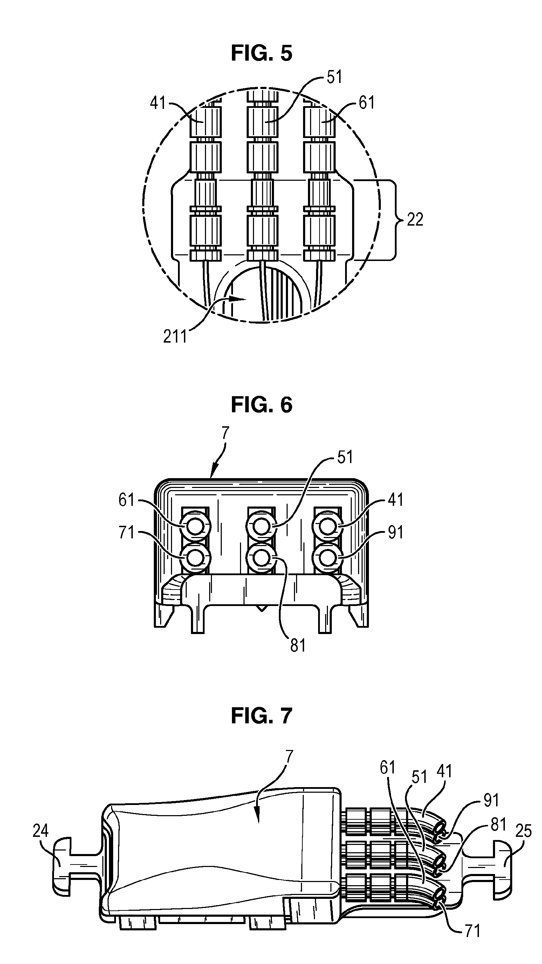

Le système de dérivation permet de dériver jusqu'à six modules optiques comme cela est illustré sur la figure 6, dans ce cas les conduites de protection 41, 51, 61, 71, 81, 91 sont empilées trois par trois au-dessus du câble de distribution.

La zone de routage 23 permet de guider les conduites de protection et par conséquent les modules optiques 4, 5, 6 dans une direction choisie en courbant d'un rayon de courbure r donné par les conduites de protection.

Ce rayon de courbure de la conduite est régi par le rayon de courbure admissible par le module optique et qui est entre 5 et 15 mm suivant le type de fibres optiques contenues dans le module.

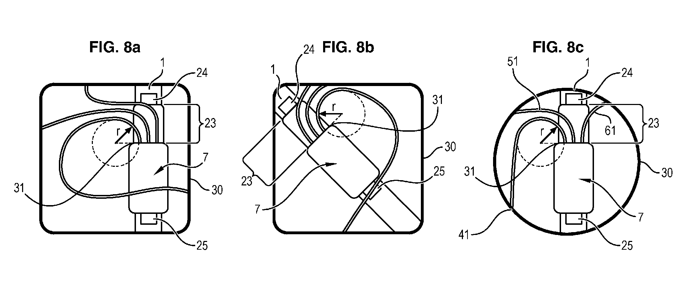

Un tel routage est rendu possible du fait que la zone de routage 23 a une longueur supérieure au minimum de rayon de courbure admissible pour le module optique, la longueur de la zone de routage étant définie le long du câble 1. Le rayon r de courbure de la conduite est de préférence supérieur à 5 mm. Le rayon de courbure r se mesure à partir de la jonction 31 entre la zone d'arrimage et la zone de routage comme cela est illustré sur les figures 8a à 8c.

Les figures 8a à 8c illustrent plusieurs agencements du boitier avec des modules optiques dérivés dans un coffret 30. Sur les figures 8a et 8b, le coffret 30 est de section rectangulaire tandis que sur la figure 8c, le coffret 30 est de section circulaire.

Enfin, pour protéger l'ensemble, le système de dérivation comprend un couvercle 7 adapté à s'emboiter sur la zone de dérivation 21 de la base 2 pour recouvrir la lumière 211 de la zone de dérivation 21.

Le couvercle 7 peut de préférence s'emboiter dans la base 2 en prévoyant sur la base et le couvercle des moyens de fixations complémentaires.

Grâce à la configuration du système de dérivation, les reprises d'effort se font directement au moyen des annelures des conduites de protection.

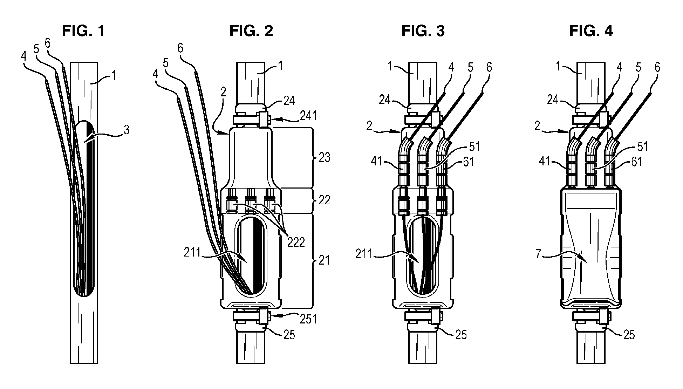

Pour installer le système de dérivation ci-dessus décrit, on effectue dans le câble une fenêtre 3 d'une longueur correspondant au maximum à la longueur du boitier puis on tire un ou plusieurs modules optiques depuis la fenêtre 3 (voir la figure 1).

Ensuite, on fixe le boitier sur le câble en recouvrant une partie de la fenêtre (voir la figure 2) et on fait passer un ou plusieurs modules optiques au travers de la lumière de la zone de dérivation.

Les modules optiques sont alors installés dans les conduites de protection qui sont ensuite arrimées sur la zone d'arrimage et orientés dans la zone de routage vers la direction déterminée (voir la figure 3).

Enfin, pour protéger l'ensemble le boitier est fermé via le couvercle qui recouvre la zone de dérivation du boitier (voir la figure 4).

## Revendications

1. Système de dérivation comprenant :
- un boitier de dérivation adapté pour être rapporté sur un câble (1) de distribution, ledit câble (1) de distribution comprenant une fenêtre (3) pratiquée sur une longueur du câble (1) de distribution et une pluralité de modules optiques (4, 5, 6) accessibles par ladite fenêtre (3), le boitier de dérivation comprenant :
■ une base (2) plate adaptée pour être fixée au-dessus du câble (1) de distribution parallèlement à un axe longitudinal central dudit câble (1), la base (2) comprenant consécutivement : une zone de dérivation (21), une zone d'arrimage (22) et une zone de routage (23), la zone de dérivation (21) comprenant une lumière (211) adaptée pour être disposée au-dessus de la fenêtre (3) du câble de distribution et dont les dimensions permettent de laisser passer au moins un module optique (4, 5, 6) ;
le système de dérivation étant **caractérisé en ce qu'**il comprend en outre :
- des conduites (45, 51, 61) annelées de protection chacune étant adaptée pour loger un module optique (4, 5, 6) ; **en ce que**
- la zone d'arrimage comprend des canaux (222) chacun étant adapté pour l'arrimage d'une conduite (45, 51, 61) annelée de protection logeant un module optique (4, 5, 6) par insertion en force de ladite conduite annelée dans le canal, les canaux étant au-dessus du câble (1) de distribution ; **en ce que**
- les zones d'arrimage (22) et de routage (23) sont disposées au dessus de la fenêtre (3) et sont adaptées pour guider les conduites annelées de protection depuis la zone d'arrimage (22), selon une courbure (r) imposée à la conduite vers une direction déterminée.

2. Système de dérivation selon la revendication 1 dans lequel la zone d'arrimage (22) recouvre partiellement la fenêtre (3) du câble de distribution.

3. Système de dérivation selon l'une des revendications précédentes, dans lequel la base (2) a une longueur au moins égale à la longueur de la fenêtre (3) du câble (1) de distribution.

4. Système de dérivation selon l'une des revendications précédentes comprenant des moyens (24, 25) de maintien du boitier sur le câble (1) de distribution, disposés de part et d'autre de la base (2) dans le prolongement de la zone de dérivation d'une part et dans le prolongement de la zone de routage d'autre part, pour maintenir le boitier en position sur le câble de distribution.

5. Système de dérivation selon la revendication précédente dans lequel les moyens de maintien sont venus de matière depuis respectivement la zone de dérivation d'une part et depuis la zone de routage d'autre part.

6. Système de dérivation selon l'une des revendications 4 à 5 comprenant en outre des colliers (241, 251) de serrage entourant les moyens (24, 25) de maintien et le câble (1) de distribution de manière à ce que le boitier soit immobile par rapport au câble de distribution.

7. Système de dérivation selon l'une des revendications 4 à 6 dans lequel les moyens de maintien (24, 25) comprennent des rugosités disposées sur la partie des moyens de maintien (24, 25) adaptée pour être en contact direct avec le câble (1) de distribution.

8. Système de dérivation selon l'une des revendications précédentes dans lequel les conduites annelées sont insérées en force dans un canal sur une longueur inférieure à la longueur totale de la conduite annelée.

9. Système de dérivation selon l'une des revendications précédentes dans lequel la zone de routage (23) est adaptée pour guider la conduite de protection depuis la zone d'arrimage, selon un rayon (r) de courbure supérieur à 5 mm mesuré à partir de la jonction entre la zone d'arrimage et la zone de routage.

10. Système de dérivation selon l'une des revendications précédentes dans lequel la zone de routage (23) a une longueur supérieure au minimum de rayon de courbure admissible pour le module optique.

11. Système de dérivation selon l'une des revendications précédentes comprenant un couvercle (7) adapté pour s'emboiter sur la zone de dérivation de la base pour recouvrir la lumière de la zone de dérivation.

12. Procédé de dérivation d'un module optique d'un câble de distribution dans lequel une fenêtre a été préalablement pratiquée, le procédé comprenant une disposition d'un système de dérivation selon l'une des revendications précédentes consistant à mettre en oeuvre les étapes suivantes :
- tirage d'un module optique depuis la fenêtre ;
- disposition du boitier de dérivation au-dessus de la fenêtre avec passage d'un module optique au travers de la lumière de la zone de dérivation ;
- installation du module optique ainsi dérivé au travers d'une conduite ;
- installation de la conduite annelée dans les moyens d'arrimage ;
- orientation du module optique ainsi installé dans la zone de routage vers la direction déterminée.
